# FASCICULE DE BREVET EUROPEEN

(11) **EP 1 943 428 B1**
(45) Date de publication et mention de la délivrance du brevet: **22.01.2014**
(21) Numéro de dépôt: 06743772.3
(22) Date de dépôt: 04.05.2006
(51) Int. Cl.: F16B 39/04, F16B 13/08, F16B 45/00, F16B 35/04

(54) **PROCEDE ET DISPOSITIF D'ASSEMBLAGE DE DEUX PIECES INDEPENDANTES**
VERFAHREN UND VORRICHTUNG ZUM VERBINDEN VON ZWEI UNABHÄNGIGEN WERKSTÜCKEN
METHOD AND DEVICE FOR ASSEMBLING TWO INDEPENDENT PARTS

(30) Priorité: 03.11.2005 FR 0511222
(43) Date de publication de la demande: 16.07.2008
(73) Titulaire: Ateliers LR Etanco, 78230 Le Pecq (FR)
(72) Inventeur: LEROY, Alain, F-78820 Juziers (FR)
(74) Mandataire: de Saint-Palais, Arnaud Marie
(86) Numéro de dépôt international: PCT/FR2006/001021
(87) Numéro de publication internationale: WO 2007/051913

(56) Documents cités:
- EP-A- 0 382 081
- DE-A1- 2 834 331
- FR-A- 915 366
- GB-A- 1 593 545
- US-A- 928 997
- US-A- 4 178 034

## Description

La présente invention concerne un procédé et un dispositif pour la solidarisation de deux pièces indépendantes.

Elle est particulièrement bien adaptée et est très utile dans le domaine d'assemblage d'un élément de fixation à un objet, cette fixation ne devant pas apparaître d'un coté de cet objet.

Elle s'applique d'une façon particulièrement avantageuse dans le cas où la matière de l'objet a des caractéristiques de résistance en traction relativement faible par rapport à ses caractéristiques de résistance en compression. C'est le cas par exemple des objets constitués d'un matériau friable ou frangible tel que la pierre, le marbre, les agglomérés de bois, et dans certains cas le béton. C'est le cas par exemple où l'objet consiste en une paroi ou un élément de paroi.

En particulier elle est particulièrement bien adaptée et est très utile dans le domaine de la pose d'éléments de parement sur des façades extérieures d'immeubles.

Jusqu'ici, les plaques murales étaient fixées par des moyens de fixations qui nécessitaient un temps de pose long, et souvent une grande précision de la position relative des deux pièces à assembler.

Les éléments de parement sont en général en marbre dans les pays où il ne gèle pas et en matériaux reconstitués dans les pays où il risque de geler l'hiver. Ces deux types de matériaux ont la propriété d'avoir une excellente résistance en compression et une résistance en traction très faible. Il est donc impératif pour ces types de matériaux que la fixation ne génère pas de contraintes de pression permanente à l'intérieur du matériau. En effet les contraintes permanentes de tension présentes à l'intérieur du matériau près des trous ont de grandes chances de générer au cours du temps, et compte tenu des cycles naturels extérieurs de température et d'humidité des microfissures qui engendrent des fissures puis des ruptures d'attache. Hors la rupture d'une attache de parement peut avoir des conséquences graves sur la sécurité des passants.

D'autre part, pour diminuer de façon significative le coût d'assemblage, il est nécessaire de diminuer le temps de pose des éléments à assembler ainsi que le temps nécessaire pour préparer les éléments à assembler.

Il existe un grand nombre de moyens et de techniques permettant d'assembler deux pièces et de les rendre solidaires. A titre d'exemple il est possible de citer les boulons, les rivets, les collages, les chevillages... mais aucune des technologies classiques ne permet d'assembler rapidement et correctement des éléments d'accrochage sur une paroi sans générer de tension interne et sans traverser cette dite paroi. En effet l'assemblage classique par boulons ou rivets nécessite de traverser la paroi. Les collages ne sont pas adaptés et n'ont pas de bonnes performances sur des matériaux non homogènes. Les systèmes d'attache par chevillage, par principe, créent des pressions radiales sur la surface interne du trou de la paroi qui, à leur tour, créent des tensions sur la surface interne du trou réalisé dans la paroi. C'est cette tension interne qui a de forte chance de générer des fissures puis des ruptures de la paroi.

En outre cet assemblage doit souvent être réalisé dans des conditions difficiles, comme par exemple sur des échafaudages.

Le document EP 0 382 081 décrit une vis pour fixer des objets sur la surface d'un mur, en particulier en brique ou en béton, cette vis présentant une bonne résistance à l'arrachage et à la rotation. La solution est une vis comportant un axe longitudinal, installée dans un trou percé dans le mur, et au moins un perçage d'axe oblique par rapport à l'axe longitudinal, et au moins une goupille prenant place dans ce perçage et pénétrant dans autre trou borgne percé dans le mur. La bonne résistance de la vis à l'arrachage et à la rotation est obtenue grâce à la goupille. Néanmoins, le positionnement précis de l'objet par rapport au mur, notamment en rotation, n'est pas assuré.

La présente invention a pour but de remédier à ces inconvénients majeurs en proposant un dispositif et un procédé spécialement bien adapté pour l'assemblage d'un élément de fixation sur une paroi de façon rapide et efficace même sans outillage particulier et dans un environnement difficile comme sur un échafaudage par exemple, sans générer de contraintes interne de tension dans la paroi, et sans traverser la dite paroi.

A cet effet elle propose un dispositif de support et/ou de solidarisation de deux pièces distinctes comprenant
- une pièce de liaison comprenant un corps sensiblement cylindrique d'axe XX' destiné à venir s'engager dans un perçage réalisé dans l'une des deux pièces à assembler ainsi que des moyens de support et/ou de fixation de la deuxième pièce en saillie à l'extérieur du perçage, ladite pièce de liaison comprenant un trou qui s'étend entre un orifice d'entrée situé au niveau des moyens de support et/ou de fixation et un orifice de sortie débouchant dans la surface cylindrique du corps, du coté de celui-ci à opposé aux moyens de support et/ou de fixation, l'axe ZZ' de ce trou étant oblique par rapport à l'axe XX' du corps
- une goupille de forme sensiblement cylindrique conformée de manière à pouvoir s'engager et pénétrer à l'intérieur du trou de manière à occuper une position verrouillée dans laquelle elle s'étend au-delà dudit orifice de sortie, cette goupille comprenant des moyens de solidarisation lui permettant de se solidariser à la pièce de liaison en position verrouillée.

L'invention a en outre pour objet un procédé pour la mise en oeuvre d'un dispositif précédemment décrit, ce procédé comprenant au moins les étapes suivantes :
1) réalisation d'un trou borgne cylindrique dans la première pièce,
2) placement du corps de la pièce de liaison dans le trou borgne cylindrique de la première pièce,
3) réalisation d'un trou borgne oblique dans la première pièce soit à l'aide d'un gabarit soit en prolongeant le trou d'axe ZZ' de la pièce de liaison et en utilisant éventuellement la pièce de liaison comme guide de perçage.
4) enfoncement de la goupille dans le trou d'axe ZZ' de la pièce de liaison de telle sorte que cette goupille pénètre également dans le trou borgne oblique de la première pièce.

Avantageusement les caractéristiques suivantes peuvent être intégrées au dispositif précédemment défini :
- Le moyen de support et de fixation de la pièce de liaison est une tige filetée solidaire de la pièce de liaison.
- Le moyen de support et de fixation est une pièce présentant une excroissance permettant d'appuyer une étagère par exemple.
- Le moyen de support et de fixation est un crochet.
- La pièce de liaison comprend au delà du corps une tête de dimension radiale supérieure au dimensions radiales du corps
- La goupille comprend un moyen permettant de retenir cette goupille dans la pièce de liaison une fois qu'elle a été placée à l'intérieur de cette pièce de liaison. Les moyens de solidarisation de la goupille peuvent être des fentes longitudinales prévues dans la goupille ou des surépaisseurs locales.
- La goupille est une pièce cylindrique de dimension radiale D1 inférieure au diamètre D2 du corps de la pièce de liaison.
- L'angle A existant entre la direction longitudinale XX' et l'axe ZZ' est idéalement égal à 20 degrés mais peut varier entre un et cinquante cinq degrés.
- La goupille est constituée principalement par un matériau inoxydable tels que l'acier inoxydable, l'aluminium, le titane, les matières plastiques ou les matières céramiques par exemple.
- La pièce de liaison est constituée principalement par un matériau inoxydable tels que l'acier inoxydable, l'aluminium, le titane, les matières plastiques ou les matières céramiques par exemple.
- La pièce de liaison comprend un épaulement entre le corps et la tête de la pièce de liaison. Cet épaulement qui présente une forme cylindrique non circulaire est destiné à rentrer dans une cavité correspondante de la deuxième pièce pour assurer un placement correct de la pièce de liaison. Dans cette position la goupille peut traverser le corps de la pièce de liaison et se retrouver bien en position pour pénétrer dans le trou borgne oblique réalisé dans la première pièce.
- L'épaulement cylindrique a une section carrée suivant un plan perpendiculaire à l'axe XX'.
- L'épaulement cylindrique a une section présentant une forme circulaire comprenant un méplat suivant un plan perpendiculaire à l'axe XX'.
- Les moyens de verrouillage de la goupille comprennent un filetage destiné à venir se visser dans un taraudage réalisé dans le trou de manière à obtenir un verrouillage démontable.
- La hauteur de l'épaulement est au maximum égale à l'épaisseur de la deuxième pièce à assembler.
- La pièce de liaison est réalisée en un matériau permettant la réalisation à faible coût par moulage par exemple.
- Dans le cas où la première pièce est obtenue par moulage, le trou borgne principal et le trou borgne oblique de la première pièce peuvent être obtenus

par moulage lors de la réalisation de la première pièce en utilisant des moules comprenant un noyau à tiroir.

Des modes d'exécution de l'invention seront décrits ci-après à titre d'exemples non limitatifs, en faisant référence aux dessins annexés dans lesquels,
La figure 1 montre schématiquement une coupe longitudinale d'un assemblage suivant l'invention permettant la liaison de deux pièces structurales
La figure 2 montre une coupe de la pièce de liaison suivant un plan YY.
La figure 3 montre schématiquement une coupe longitudinale d'un assemblage suivant l'invention permettant de solidariser un téton d'appui par rapport à une paroi
La figure 4 montre une coupe de la pièce de liaison suivant un plan BB.
La figure 5 montre schématiquement une coupe longitudinale d'un assemblage suivant l'invention et comprenant un crochet

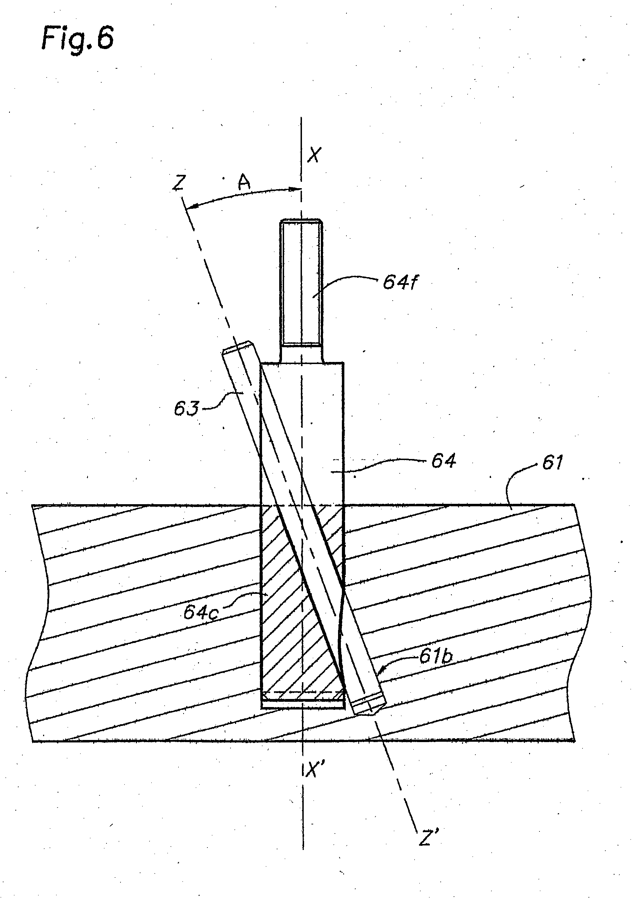

La figure 6 montre schématiquement une coupe longitudinale d'un assemblage suivant l'invention et comprenant un embout fileté.

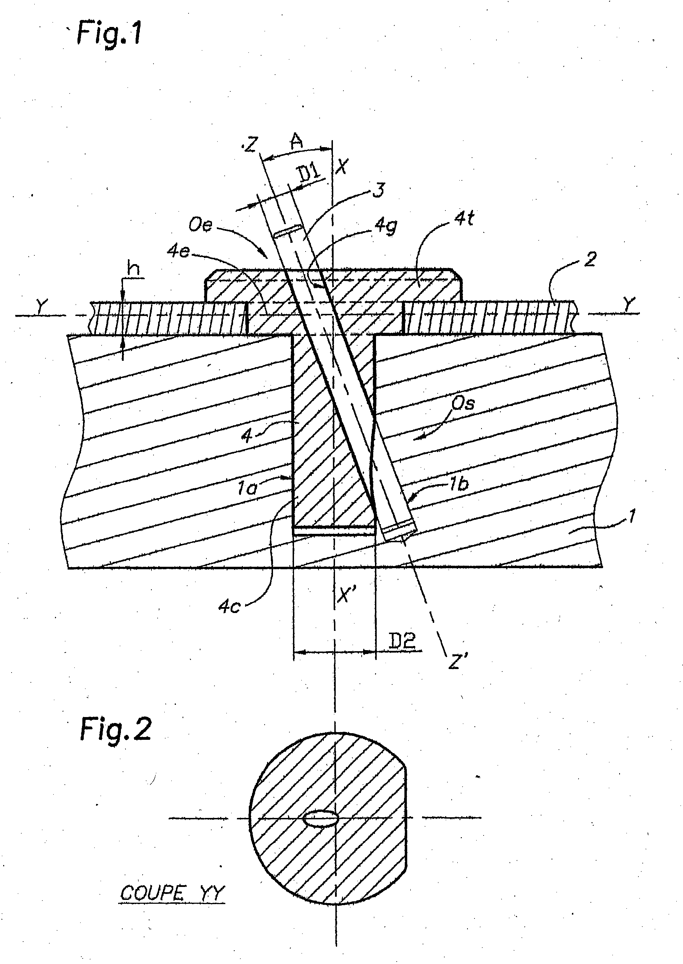

Dans l'exemple illustré sur les figures 1 et 2 une première pièce (1), ici un élément de parement doit être fixée sur une deuxième pièce (2) ici un élément de structure métallique afin d'équiper la façade d'un immeuble. Pour cela on perce tout d'abord un trou borgne (1a) d'axe XX' dans la première pièce (1) en prenant soin de ne pas traverser l'élément de parement pour que la liaison ne soit pas visible et pour que l'intégrité de la surface extérieure soit préservée. Par exemple ce trou borgne d'axe XX' peut avoir un diamètre de 8 mm. On place ensuite l'élément de structure constituant la deuxième pièce (2) au droit du trou borgne d'axe XX' qui vient juste d'être réalisé dans la première pièce. Cette deuxième pièce comprend au moins un trou cylindrique non circulaire (ayant une forme partiellement circulaire avec un méplat, obtenu par exemple par emboutissage) comme le montre la figure 2. On place une pièce de liaison (4) comprenant un corps cylindrique (4c) de diamètre 8 mm, un épaulement (4e) et une tête (4t) dans le trou borgne (1a) de la première pièce (1) en en utilisant le méplat de la deuxième pièce pour assurer une orientation correcte. Le diamètre de la tête (4t) est ici égal à 16 mm ce qui est une dimension supérieure au diamètre du corps (4c). On utilise la pièce de liaison (4) comme guide pour réaliser un trou borgne oblique (1b) de diamètre par exemple de 4 mm dans la première pièce (1). On enfonce une goupille (3), qui ici est fendue, de force dans le trou oblique (4g) de la pièce de liaison et dans le trou borgne oblique (1b) de la première pièce. L'assemblage est donc réalisé. L'obliquité (d'angle A) et la profondeur de l'enfoncement de la goupille dans la première pièce sont optimisés pour tenir compte des critères de résistance requis.

Les modes de réalisation suivants ne font pas partie de l'invention mais représent des éléments qui sont utiles à la compréhension de l'invention.

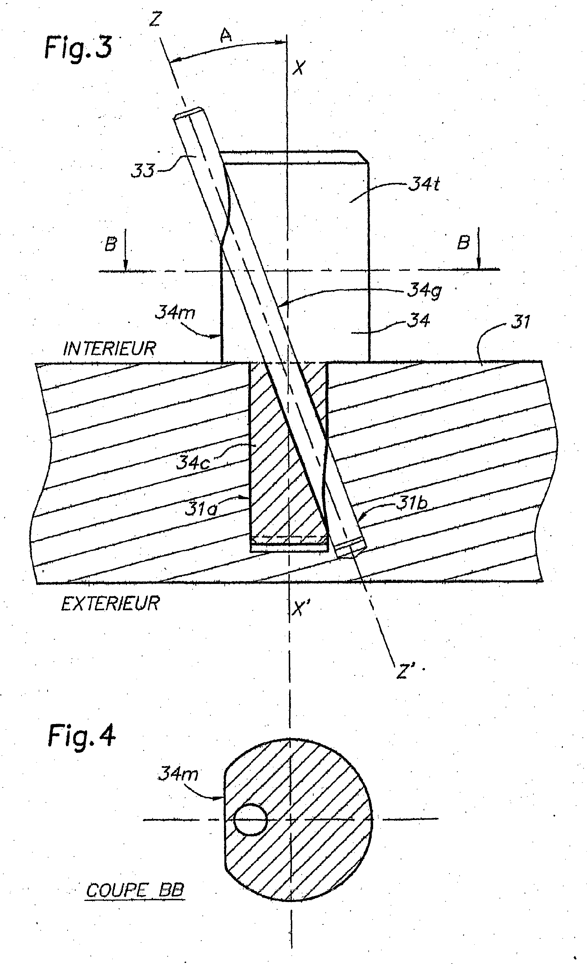

Les figures 3 et 4 montrent, un téton (34) qui doit être fixé sur l'intérieur d'une paroi, ici, en aggloméré, sans traverser cette dite paroi pour des raisons d'esthétique. Ce téton servira à retenir une étagère par exemple, et comporte pour cela une partie apparente cylindrique (34t) comportant un méplat (34m) comme montré sur les figures 3 et 4 et une partie cylindrique (34c). Pour cela on perce tout d'abord un trou borgne (31a) d'axe XX' dans la première pièce (31) en prenant soin de ne pas déboucher pour que la liaison ne soit pas visible de l'extérieur et pour que l'intégrité de la surface extérieure soit préservée. Par exemple ce trou borgne (31a) d'axe XX' peut avoir un diamètre de 6 mm. On place la partie cylindrique (34c) du téton (34), dans le trou borgne (31a) de la première pièce (31). Le diamètre de la partie apparente (34b) du téton est ici égale à 12 mm. On utilise la pièce de liaison comme guide pour réaliser un trou borgne oblique (31b) de diamètre par exemple de 3 mm dans la première pièce (31). A l'aide d'un marteau on enfonce une goupille (33), qui ici est fendue, de force dans un trou oblique (34g) de la pièce de liaison et dans le trou borgne oblique (31b) de la première pièce. L'assemblage est donc réalisé. L'angle A formé par les axes XX' et ZZ' et la profondeur de l'enfoncement de la goupille dans la première pièce sont optimisés pour tenir compte des critères de résistance requis et des critères de praticité de pose dans un environnement difficiles comme sur une échelle par exemple. Dans ce cas, l'angle A est choisi égal à 30 degrés

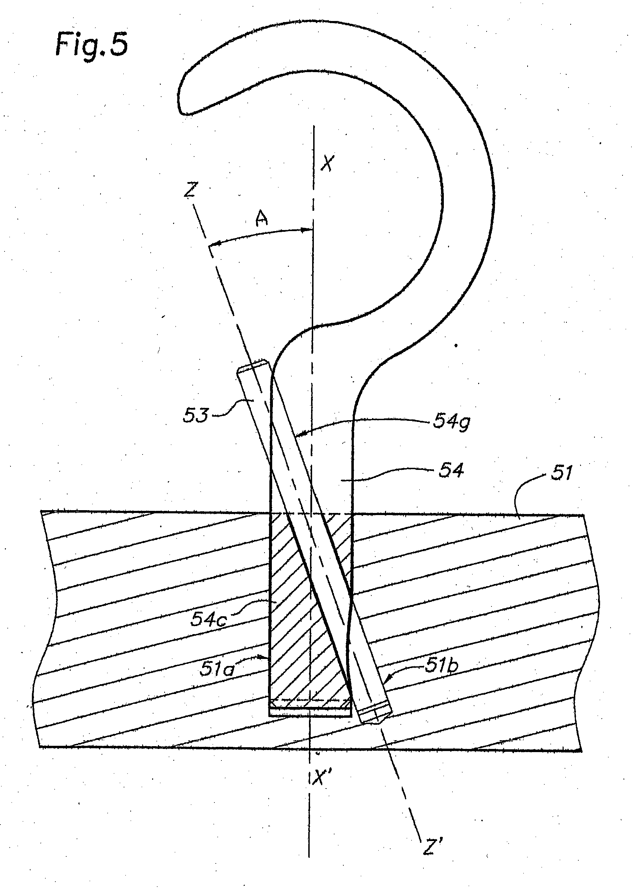

La figure 5 montre un crochet (54) qui doit être fixé sur l'intérieur d'une paroi (51), ici en béton, sans traverser cette dite paroi pour des raisons de sécurité. Ce crochet servira à retenir un cordage par exemple. Pour cela on perce tout d'abord un trou borgne (51a) d'axe XX' dans la première pièce (51) en prenant soin de ne pas déboucher pour que la liaison ne soit pas visible de l'extérieur et pour que l'intégrité de la surface extérieure soit préservée. Par exemple ce trou borgne (51a) d'axe XX' peut avoir un diamètre de 6 mm. On place une pièce de liaison (54) comprenant un corps cylindrique (54c) de diamètre 6 mm, dans le trou borgne (51a) de la première pièce (51) Le diamètre de la partie apparente du crochet varie de 12 à 2 mm. On utilise une pièce de liaison (54) comme guide pour réaliser un trou borgne oblique (51b) de diamètre par exemple de 3 mm dans la première pièce (51). A l'aide d'un marteau on enfonce une goupille (53), qui ici est fendue, de force dans un trou oblique (54g) de la pièce de liaison et dans le trou borgne oblique (51b) de la première pièce (51). L'âssemblage est donc réalisé. L'angle A (formé entre les axes XX' et ZZ') et la profondeur de l'enfoncement de la goupille dans la première pièce sont optimisés pour tenir compte des critères de résistance requis et des critères de praticité de pose dans un environnement difficiles. Dans ce cas A est choisi égal à 30 degrés.

Le procédé selon l'invention convient bien pour assembler des plaques de revêtement sur des structures de façades d'immeubles, mais peut convenir à tous type d'assemblage nécessitant une pose rapide et peu coûteuse même dans un environnement d'assemblage difficile en minimisant les contraintes de tensions internes à l'endroit de la fixation comme la fixation d'une dent par exemple.

## Revendications

1. Dispositif de support et/ou de solidarisation de deux pièces distinctes (1,2) comportant :
- une pièce de liaison (4) comprenant :
- un corps sensiblement cylindrique (4c) d'axe longitudinal destiné à venir s'engager dans un trou réalisé dans une première pièce (1) à assembler,
- au delà dudit corps (4c), une tête (4t) de dimension radiale supérieure au dimensions radiales du corps,
- un trou (4g) qui s'étend entre un orifice d'entrée (Oe) situé au niveau de ladite tête (4t) et un orifice de sortie (Os) débouchant dans la surface cylindrique du corps (4c), l'axe de ce trou (4g) étant oblique par rapport à l'axe longitudinal du corps (4c),
- et une goupille (3) de forme sensiblement cylindrique conformée de manière à pouvoir s'engager et pénétrer à l'intérieur du trou (4g) de manière à occuper une position verrouillée dans laquelle elle s'étend au-delà dudit orifice de sortie (Os), cette goupille comprenant des moyens de solidarisation lui permettant de se solidariser à la pièce de liaison en position verrouillée,
**caractérisé en ce que** la pièce de liaison comprend un épaulement (4e) entre le corps (4c) et la tête (4t) de la pièce de liaison (4), cet épaulement présentant une forme cylindrique non circulaire et étant destiné à entrer dans une cavité correspondante de la deuxième pièce (2) pour assurer un placement correct de la pièce de liaison.

2. Dispositif suivant la revendication 1 **caractérisé en ce que** les moyens de solidarisation de la goupille (3) sont des fentes longitudinales prévues dans la goupille ou des surépaisseurs locales.

3. Dispositif suivant l'une quelconque des revendications 1 ou 2 **caractérisé en ce que** la goupille (3) est une pièce cylindrique de dimension radiale D1 inférieure au diamètre D2 du corps (4c) de la pièce de liaison.

4. Dispositif suivant l'une quelconque des revendications 1 à 3 **caractérisé en ce que** l'angle A existant entre l'axe longitudinal et l'axe oblique est idéalement égal à 20 degrés mais peut être choisi entre un et cinquante cinq degrés.

5. Dispositif suivant l'une quelconque des revendications 1 à 4 **caractérisé en ce que** la goupille (3) est constituée principalement par un matériau inoxydable.

6. Dispositif suivant l'une quelconque des revendications 1 à 5 **caractérisé en ce que** la pièce de liaison (4) est constituée principalement par un matériau inoxydable.

7. Dispositif suivant l'une quelconque des revendications 1 à 6 **caractérisé en ce que** l'épaulement cylindrique (4e) a une section carrée suivant un plan perpendiculaire à l'axe longitudinal.

8. Dispositif suivant l'une quelconque des revendications 1 à 6 **caractérisé en ce que** l'épaulement cylindrique (4e) a une section présentant une forme circulaire comprenant un méplat suivant un plan perpendiculaire à l'axe longitudinal.

9. Dispositif suivant l'une quelconque des revendications 1 à 8 **caractérisé en ce que** les moyens de verrouillage de la goupille comprennent un filetage destiné à venir se visser dans un taraudage réalisé dans le trou (4g) de manière à obtenir un verrouillage démontable.

10. Dispositif suivant l'une quelconque des revendications 1 à 9 **caractérisé en ce que** la hauteur (h) de l'épaulement (4e) est au maximum égale à l'épaisseur de la deuxième pièce à assembler.

11. Dispositif suivant l'une quelconque des revendications 1 à 10 **caractérisé en ce que** la pièce de liaison (4) est réalisée en un matériau permettant la réalisation à faible coût de celle-ci, par exemple, par moulage.

12. Procédé de mise en oeuvre d'un dispositif pour la solidarisation de deux pièces indépendantes (1, 2), ce procédé faisant intervenir :
- une pièce de liaison (4) comprenant :
- un corps sensiblement cylindrique (4c) d'axe longitudinal destiné à venir s'engager dans un trou réalisé dans la première pièce (1) à assembler,
- au delà dudit corps (4c), une tête (4t) de dimension radiale supérieure aux dimensions radiales du corps,
- un trou (4g) qui s'étend entre un orifice d'entrée (Oe) situé au niveau de ladite tête (4t) et un orifice de sortie (Os) débouchant dans la surface cylindrique du corps (4c), l'axe de ce trou (4g) étant oblique par rapport à l'axe longitudinal du corps (4c),
- un épaulement (4e) entre le corps (4c) et la tête (4t) de la pièce de liaison (4), cet épaulement présentant une forme cylindrique non circulaire et étant destiné à entrer dans une cavité correspondante de la deuxième pièce (2) pour assurer un placement correct de la pièce de liaison,
**caractérisé en ce qu'**il comprend au moins les étapes suivantes :
a) réalisation d'un trou cylindrique (1a) dans la première pièce (1),
b) placement de la deuxième pièce (2) au droit dudit trou cylindrique 1a), ladite deuxième pièce (2) comportant au moins un trou cylindrique non circulaire,
c) placement du corps (4c) de la pièce de liaison (4) dans le trou cylindrique (1a) de la première pièce (1) et de l'épaulement (4e) dans le trou de la deuxième pièce (2),
d) réalisation d'un trou borgne oblique (1b) dans la première pièce (1) soit à l'aide d'un gabarit soit en prolongeant le trou (4g) d'axe oblique de la pièce de liaison (4), en utilisant éventuellement la pièce de liaison (4) comme guide de perçage,
e) engagement d'une goupille (3) dans le trou (4g) d'axe oblique de la pièce de liaison (4) de telle sorte que cette goupille (3) pénètre également dans le trou borgne oblique (1b) de la première pièce (1).

13. Procédé de mise en oeuvre d'un dispositif pour la solidarisation de deux pièces indépendantes suivant la revendication 12, **caractérisé en ce que** l'étape d'engagement de la goupille (3) comprend une étape de solidarisation de la goupille (3) dans la pièce de liaison (4).

14. Procédé de mise en oeuvre d'un dispositif pour la solidarisation de deux pièces indépendantes suivant la revendication 13 **caractérisé en ce que** l'étape de solidarisation de la goupille (3) dans la pièce de liaison (4) s'effectue par serrage, coincement et/ou filetage.

## Patentansprüche

1. Vorrichtung zum Stützen und/oder festen Verbinden von zwei getrennten Elementen (1, 2) umfassend:
- ein Verbindungselement (4) umfassend:
- einen im Wesentlichen zylindrischen Längsachsenkörper (4c), der zum Eingreifen in ein Fügeloch bestimmt ist, das in einem ersten Element (1) realisiert ist,
- über dem Körper (4c) einen Kopf (4t) von radialer Dimension, die größer ist als die radialen Dimensionen des Körpers,
- ein Loch (4g), das sich zwischen einer Eintrittsöffnung (Oe), die sich am Kopf (4t) befindet, und einer Austrittsöffnung (Os), die in die zylindrische Oberfläche des Körpers (4c) einmündet, erstreckt, wobei die Achse dieses Lochs (4g) schräg zur Längsachse des Körpers (4c) liegt,
- und einen Stift (3) von im Wesentlichen zylindrischer Form, der so ausgelegt ist, dass er so in das Innere des Lochs (4g) eingreifen und eindringen kann, dass er eine verriegelte Position einnimmt, in der er sich über die Austrittsöffnung (Os) hinaus erstreckt, wobei dieser Stift Mittel zum festen Verbinden umfasst, durch die er sich mit dem Verbindungselement in der verriegelten Position fest verbinden lässt,
- **dadurch gekennzeichnet, dass** das Verbindungselement eine Schulter (4e) zwischen dem Körper (4c) und dem Kopf (4t) des Verbindungselements (4) umfasst, wobei diese Schulter eine zylindrische, nicht kreisförmige Form aufweist und dazu bestimmt ist, in einen entsprechenden Hohlraum des zweiten Elements (2) einzutreten, um eine korrekte Platzierung des Verbindungselements sicherzustellen.

2. Vorrichtung nach Anspruch 1, **dadurch gekennzeichnet, dass** die Mittel zum festen Verbinden des Stifts (3) Längsschlitze, die dem Stift vorgesehen sind, oder lokale Überdicken sind.

3. Vorrichtung nach einem der Ansprüche 1 oder 2, **dadurch gekennzeichnet, dass** der Stift (3) ein zylindrisches Element mit radialer Dimension D1 ist, die kleiner ist als der Durchmesser D2 des Körpers (4c) des Verbindungselements.

4. Vorrichtung nach einem der Ansprüche 1 bis 3, **dadurch gekennzeichnet, dass** der Winkel A, der zwischen der Längsachse und der Schrägachse vorliegt, idealerweise gleich 20° beträgt, aber zwischen 1 und 55° gewählt werden kann.

5. Vorrichtung nach einem der Ansprüche 1 bis 4, **dadurch gekennzeichnet, dass** der Stift (3) hauptsächlich aus einem nicht oxidierbaren Material aufgebaut ist.

6. Vorrichtung nach einem der Ansprüche 1 bis 5, **dadurch gekennzeichnet, dass** das Verbindungselement (4) hauptsächlich aus einem nicht oxidierbaren Material aufgebaut ist.

7. Vorrichtung nach einem der Ansprüche 1 bis 6, **dadurch gekennzeichnet, dass** die zylindrische Schulter (4e) einen quadratischen Abschnitt aufweist, der in einer zur Längsachse senkrechten Ebene verläuft.

8. Vorrichtung nach einem der Ansprüche 1 bis 6, **dadurch gekennzeichnet, dass** die zylindrische Schulter (4e) einen Abschnitt aufweist, der eine kreisförmige Form aufweist, die eine Flachstelle umfasst, die in einer zur Längsachse senkrechten Ebene verläuft.

9. Vorrichtung nach einem der Ansprüche 1 bis 8, **dadurch gekennzeichnet, dass** die Verriegelungsmittel des Stifts ein Gewinde umfassen, das dazu bestimmt ist, in ein Innengewinde hineingeschraubt zu werden, das in dem Loch (4g) so realisiert ist, dass eine demontierbare Verschraubung erhalten wird.

10. Vorrichtung nach einem der Ansprüche 1 bis 9, **dadurch gekennzeichnet, dass** die Höhe (h) der Schulter (4e) maximal gleich der Dicke des zweiten zusammenzufügenden Elements entspricht.

11. Vorrichtung nach einem der Ansprüche 1 bis 10, **dadurch gekennzeichnet, dass** das Verbindungselement (4) aus einem Material realisiert ist, das dessen Realisierung zu geringen Kosten, beispielsweise durch Formpressen, erlaubt.

12. Verfahren zur Herstellung einer Vorrichtung zum festen Verbinden von zwei getrennten Elementen (1, 2) wobei das Verfahren folgendes umfasst:
- ein Verbindungselement (4) umfassend:
- einen im Wesentlichen zylindrischen Längsachsenkörper (4c), der dazu vorgesehen ist, in ein Fügeloch einzugreifen, das in einem ersten Element (1) realisiert ist,
- über dem Körper (4c) einen Kopf (4t) von radialer Dimension, die größer ist als die radialen Dimensionen des Körpers,
- ein Loch (4g), das sich zwischen einer Eintrittsöffnung (Oe), die sich am Kopf (4t) befindet, und einer Austrittsöffnung (Os), die in die zylindrische Oberfläche des Körpers (4c) eimnündet, erstreckt, wobei die Achse dieses Lochs (4g) schräg zur Längsachse des Körpers (4c) liegt,
- eine Schulter (4e) zwischen dem Körper (4c) und dem Kopf (4t) des Verbindungselements (4), wobei diese Schulter eine zylindrische, nicht kreisförmige Form aufweist und dazu bestimmt ist, in einen entsprechenden Hohlraum des zweiten Element (2) einzudringen, um eine korrekte Platzierung des Verbindungselements sicherzustellen,
**dadurch gekennzeichnet, dass** es mindestens die folgenden Schritte umfasst:
a) Realisieren eines zylindrischen Lochs (1a) in einem ersten Element (1),
b) Platzieren des zweiten Elements (2) an das zylindrische Loch (1a) angrenzend, wobei das zweite Element (2) mindestens ein zylindrisches, nicht kreisförmiges Loch umfasst,
c) Platzierten des Körpers (4c) des Verbindungselements (4) im dem zylindrischen Loch (1a) des ersten Elements (1) und der Schulter (4e) in dem Loch des zweiten Elements (2),
d) Realisieren eines schrägen Sacklochs (1b) in dem ersten Element (1) entweder mit Hilfe einer Schablone oder in Verlängerung des Schrägachsenlochs (4g) des Verbindungselements (4) gegebenenfalls unter Verwendung des Verbindungselements (4) als Bohrführung,
e) Eingreifen eines Stifts (3) in das Schrägachsenloch (4g) des Verbindungelements (4) derart, dass dieser Stift (3) auch in das schräge Sackloch (1b) des ersten Elements (1) eindringt.

13. Verfahren zur Herstellung einer Vorrichtung zum festen Verbinden von zwei unabhängigen Elementen nach Anspruch 12, **dadurch gekennzeichnet, dass** der Schritt des Eingreifens des Stifts (3) einen Schritt des festen Verbindens des Stifts (3) mit dem Verbindungselement (4) umfasst.

14. Verfahren zur Herstellung einer Vorrichtung zum festen Verbinden von zwei unabhängigen Elementen nach Anspruch 13, **dadurch gekennzeichnet, dass** der Schritt des festen Verbindens des Stifts (3) in dem Verbindungselement (4) durch Klemmen, Presssitz und/oder Schrauben erfolgt.

## Claims

1. Device for supporting and/or attaching two separate parts (1, 2) comprising:
- a connecting part (4) comprising:
- a substantially cylindrical body (4c) with a longitudinal axis intended to engage in a hole made in a first part (1) to be assembled,
- beyond said body (4c), a head (4t) with radial dimensions greater than the radial dimensions of the body,
- a hole (4g) which extends between an inlet orifice (Oe) located on said head (4t) and an outlet orifice (Os) opening in the cylindrical surface of the body (4c), with the axis of this hole (4g) being inclined in relation to the longitudinal axis of the body (4c),
- and a substantially cylindrically-shaped pin (3) shaped in such a way as to be able to be engaged and penetrate into the hole (4g) in such a way as to occupy a locked position wherein it extends beyond said outlet orifice (Os), this pin comprising means for attaching that allow it to attach to the connecting part in locked position,
**characterised in that** the connecting part comprises a shoulder (4e) between the body (4c) and the head (4t) of the connecting part (4), with this shoulder having a non-circular cylindrical shape and being intended to enter into a corresponding cavity of the second part (2) in order to provide a correct positioning of the connecting part.

2. Device according to claim 1 **characterised in that** the means for attaching the pin (3) are longitudinal slots provided in the pin or local excess thicknesses.

3. Device according to any of claims 1 or 2 **characterised in that** the pin (3) is a cylindrical part with a radial dimension D1 less than the diameter D2 of the body (4c) of the connecting part.

4. Device according to any of claims 1 to 3 **characterised in that** the angle A that exists between the longitudinal axis and the inclined axis is ideally equal to 20 degrees but can be chosen between one and fifty-five degrees.

5. Device according to any of claims 1 to 4 **characterised in that** the pin (3) is primarily constituted of a non-oxidizing material.

6. Device according to any of claims 1 to 5 **characterised in that** the connecting part (4) is primarily constituted of a non-oxidizing material.

7. Device according to any of claims 1 to 6 **characterised in that** the cylindrical shoulder (4e) has a square section according to a plane perpendicular to the longitudinal axis.

8. Device according to any of claims 1 to 6 **characterised in that** the cylindrical shoulder (4e) has a section having a circular shape comprising a flat surface according to a plane perpendicular to the longitudinal axis.

9. Device according to any of claims 1 to 8 **characterised in that** the means for locking the pin include a threading intended to be screwed into a tapping made in the hole (4g) in such a way as to obtain a detachable locking.

10. Device according to any of claims 1 to 9 **characterised in that** the height (h) of the shoulder (4e) is at most equal to the thickness of the second part to be assembled.

11. Device according to any of claims 1 to 10 **characterised in that** the connecting part (4) is made from a material allowing the latter to be produced at low cost, for example, by moulding.

12. Method for implementing a device for attaching two independent parts (1, 2), with this method involving:
- a connecting part (4) comprising:
- a substantially cylindrical body (4c) with a longitudinal axis intended to engage in a hole made in the first part (1) to be assembled,
- beyond said body (4c), a head (4t) with a radial dimension greater than the radial dimensions of the body,
- a hole (4g) which extends between an inlet orifice (Oe) located on said head (4t) and an outlet orifice (Os) opening in the cylindrical surface of the body (4c), with the axis of this hole (4g) being inclined in relation to the longitudinal axis of the body (4c),
- a shoulder (4e) between the body (4c) and the head (4t) of the connecting part (4), with this shoulder having a non-circular cylindrical shape and being intended to enter into a corresponding cavity of the second part (2) in order to provide a correct positioning of the connecting part,
**characterised in that** it comprises at least the following steps:
a) creating a cylindrical hole (1a) in the first part (1),
b) positioning of the second part (2) in line with said cylindrical hole (1a), said second part (2) comprising at least one non-circular cylindrical hole,
c) positioning of the body (4c) of the connecting part (4) in the cylindrical hole (1a) of the first part (1) and of the shoulder (4e) in the hole of the second part (2),
d) creating an inclined blind hole (1b) in the first part (1) either using a template or by extending the hole (4g) with inclined axis of the connecting part (4), possibly using the connecting part (4) as a drilling guide,
e) engaging of a pin (3) into the hole (4g) with inclined axis of the connecting part (4) in such a way that this pin (3) also penetrates into the inclined blind hole (1b) of the first part (1).

13. Method of implementing a device for the attaching of two independent parts according to claim 12, **characterised in that** the step of engaging the pin (3) comprises a step of attaching the pin (3) in the connecting part (4).

14. Method of implementing a device for the attaching of two independent parts according to claim 13 **characterised in that** the step of attaching the pin (3) in the connecting part (4) is carried out by clamping, wedging and/or threading.
